(19) Europäisches Patentamt
European Patent Office
Office européen des brevets

(11) Veröffentlichungsnummer: **0 383 725 A2**

(12) # EUROPÄISCHE PATENTANMELDUNG

(21) Anmeldenummer: **90810089.4**

(22) Anmeldetag: **08.02.90**

(51) Int. Cl.[5]: **C08G 65/40, C08G 67/00, C08G 75/23, C08G 75/18**

(30) Priorität: **17.02.89 CH 558/89**

(43) Veröffentlichungstag der Anmeldung: **22.08.90 Patentblatt 90/34**

(84) Benannte Vertragsstaaten: **DE ES FR GB IT NL**

(71) Anmelder: **CIBA-GEIGY AG**
**Klybeckstrasse 141**
**CH-4002 Basel(CH)**

(72) Erfinder: **Pfaendner, Rudolf, Dr.**
**Sackgasse 3**
**D-6149 Rimbach/Odenwald 1(DE)**
Erfinder: **Kramer, Andreas, Dr.**
**Bundtels**
**CH-3186 Düdingen(CH)**

(54) **Neue Polyether.**

(57) Die Erfindung betrifft Polyarylenether, die, bezogen auf die Gesamtmenge der im Polyetherharz vorhandenen Strukturelemente, 10-90 Mol-% eines wiederkehrenden Strukturelements der Formel I

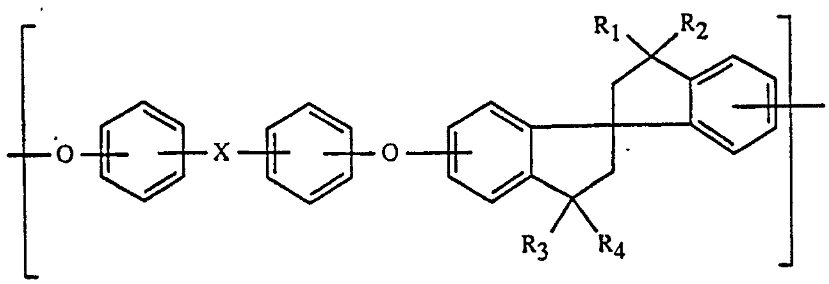

(I)

und 10-90 Mol-% eines wiederkehrenden Strukturelements der Formel II

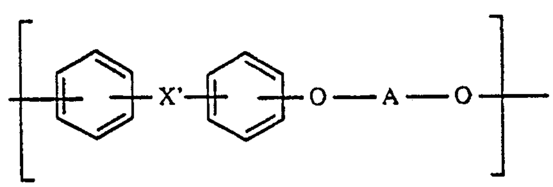

(II)

enthalten, worin X und X′ unabhängig voneinander -SO-, $-SO_2-$ oder -CO- bedeuten, $R_1$, $R_2$, $R_3$ und $R_4$ unabhängig voneinander Wasserstoff oder $C_1$-$C_4$-Alkyl sind, und A für einen aromatischen Rest steht.
Diese technischen Werkstoffe zeichnen sich durch sehr gute mechanische und thermische Eigenschaften aus.

EP 0 383 725 A2

## Neue Polyether

Die vorliegende Erfindung betrifft neue Polyarylenether, ein Verfahren zu deren Herstellung und deren Verwendung als technische Werkstoffe.

Aus WO 88/06605 sind einige Polyether-sulfone und -ketone bekannt, welche auf der Basis von Bisphenolspirobiindanen aufgebaut sind. Diese genügen jedoch nicht in aller Hinsicht den hohen Anforderungen, die heute an ein hochwertiges thermoplastisches Harz gestellt werden. So befriedigen insbesondere die mechanischen Eigenschaften nicht, was sich unter anderem in zum Teil ungenügender Zugfestigkeit ausdrückt.

Die vorliegene Erfindung betrifft neue technische Werkstoffe mit sehr guten mechanischen Eigenschaften und ausgezeichneter Wärmeformbeständigkeit. Ueberraschenderweise erreichen die erfindungsgemässen Polyarylenether mit Bisphenolspirobiindan-Struktureinheiten trotz relativ hoher aliphatischer Anteile hervorragende mechanische und thermische Eigenschaften.

Die erfindungsgemässen hochwertigen thermoplastischen Harze sind Polyarylenether, die, bezogen auf die Gesamtmenge der im Polyetherharz vorhandenen Strukturelemente, 10-90 Mol-% eines wiederkehrenden Strukturelements der Formel I

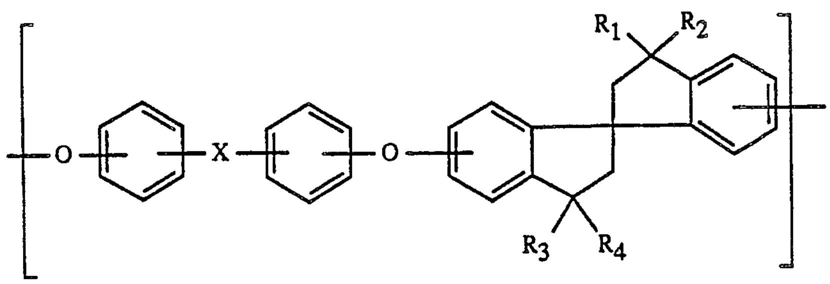 (I)

und 10-90 Mol-% eines wiederkehrenden Strukturelements der Formel II

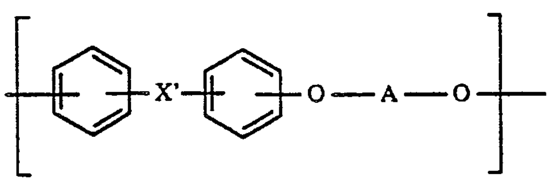 (II)

enthalten, worin X und X′ unabhängig voneinander -SO-, $-SO_2-$ oder -CO- bedeuten, $R_1$, $R_2$, $R_3$ und $R_4$ unabhängig voneinander Wasserstoff oder $C_1$-$C_4$-Alkyl sind, und A eine Gruppe der Formeln IIIa-IIIe darstellt

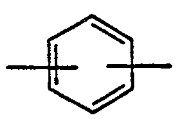 (IIIa), 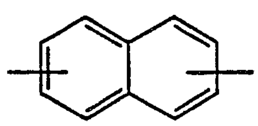 (IIIb), 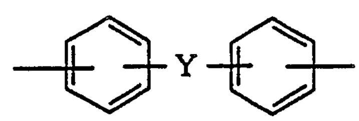 (IIIc),

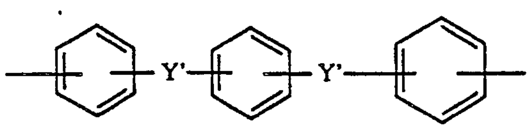 (IIId) oder

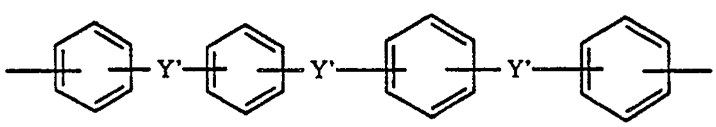 (IIIe),

wobei Y für $-CH_2-$, $-C(CF_3)_2-$, -S-, -SO-, $-SO_2-$, -O- oder -CO- und Y′ für eine direkte Bindung, $-CH_2-$, $-C(CH_3)_2-$, $-C(CF_3)_2$, -S-,-SO-, $-SO_2-$, -O-,-CO- steht.

Vorzugsweise enthalten die erfindungsgemässen Polyarylenether 10-70 Mol-% eines wiederkehrenden Strukturelements der Formel I und 90-30 Mol-% eines wiederkehrenden Strukturelements der Formel II.

Besonders bevorzugte Polyarylenether enthalten 10-45 Mol-% eines wiederkehrenden Strukturelements der Formel I und 90-55 Mol-% eines wiederkehrenden Strukturelements der Formel II.

Die erfindungsgemässen Polyarylenether besitzen eine reduzierte Viskosität von etwa 0,1 bis etwa 1,5 dl/g. Dies entspricht einem Molekulargewicht (Gewichtsmittel) von 2000 bis etwa 100000.

Die bevorzugte Bedeutung von X in der Formel I und X′ in der Formel II ist $-SO_2-$ oder -CO-.

Bedeuten die Reste $R_1$, $R_2$, $R_3$ und $R_4$ $C_1$-$C_4$-Alkyl, so kann es sich um Methyl, Ethyl, n-Propyl, Isopropyl oder n-Butyl handeln. Bevorzugte Bedeutung von $R_1$, $R_2$, $R_3$ und $R_4$ ist Methyl.

Die bevorzugte Bedeutung von Y in der Formel IIIc ist -S-, $-SO_2-$, -O- oder -CO- und von Y′ in den Formeln IIId und IIIe die direkte Bindung, $-C(CH_3)_2-$, -S-, $-SO_2-$, -O- oder -CO-.

Die Gruppe A entspricht vorzugsweise einer Formel IIIa oder IIIc, worin Y -S-, $-SO_2-$, -O-oder-CO- bedeutet.

Besonders bevorzugt ist eine Gruppe A mit einer Formel IIIc, worin Y gleich $-SO_2-$bedeutet.

Die erfindungsgemässen Polyarylenether können z.B. hergestellt werden, indem man eine Verbindung der Formel IV

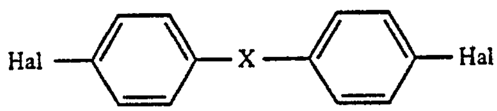 (IV),

worin Hal für Halogen, insbesondere für Fluor oder Chlor steht, und X die oben angegebene Bedeutung hat, mit einem Spirobiindan der Formel (V)

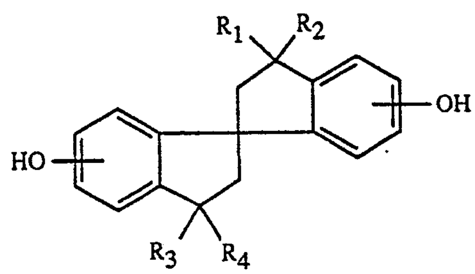 (V),

worin $R_1$, $R_2$, $R_3$ und $R_4$ die oben angegebenen Bedeutungen haben, mit einem Gemisch aus einer Verbindung der Formel V und einem darin bis zu 90 Mol-% enthaltenen Phenol der Formel VI

HO-A-OH (VI),

worin A die oben angegebene Bedeutung hat,

in an sich bekannter Weise in Gegenwart alkalischer Katalysatoren in einem polaren aprotischen Lösungsmittel polykondensiert.

Anstelle der Diphenole der Formeln V und VI können in an sich bekannter Weise auch die entsprechenden Alkali- oder Erdalkali-Phenolate, z.B. die Kalium- oder Calciumphenolate oder Gemische von ihnen, eingesetzt werden.

Ueblicherweise wird die Polykondensationsreaktion in etwa äquimolaren Verhältnissen der Verbindungen IV:V bzw. IV:(V+VI) durchgeführt. Unter etwa äquimolaren Mengen versteht man in diesem Zusammenhang ein Molverhältnis von 0,8:1,2 bis 1,2:0,8.

Als alkalische Katalysatoren verwendet man in diesem Verfahren in der Regel Alkali- und Erdalkalicarbonate, wie Natrium-, Kalium- oder Calciumcarbonat; doch können auch andere alkalische Reagentien, wie Natriumhydroxid, Kaliumhydroxid oder Calciumhydroxid Verwendung finden.

Polare, aprotische Lösungsmittel, die beim Verfahren zur Herstellung der erfindungsgemässen Polyetherharze eingesetzt werden können, sind beispielsweise Dimethylsulfoxid, Dimethylacetamid, Diethylacetamid, Tetramethylharnstoff, N-Methylcaprolactam, N-Methylpyrrolidon und bevorzugt Diphenylsulfon.

Die Reaktion wird zweckmässig bei erhöhter Temperatur durchgeführt, vorzugsweise bis zur Rückfluss-Temperatur des Lösungsmittels, also etwa bis 350° C.

Häufig empfiehlt sich die Mitverwendung eines Schleppmittels, wie z.B. Chlorbenzol, Xylol oder Toluol,

um das bei der Umsetzung gebildete Wasser azeotrop aus dem Reaktionsgemisch entfernen zu können.

Die Verbindungen der Formel IV sind bekannt und zum Teil im Handel erhältlich. Geeignete Verbindungen der Formel IV sind beispielsweise 4,4′-Difluorobenzophenon; 1,3-Bis(4-fluorobenzoyl)benzol, 4,4′-Dichlorobenzophenon, 4,4′-Difluorodiphenylsulfon oder 4,4′-Dichlorodiphenylsulfon.

Die Verbindungen der Formel V sind ebenfalls bekannt und können z.B. gemäss der EP-A 0 264 026 hergestellt werden. Insbesondere bevorzugt ist dabei die Verbindung der Formel V*:

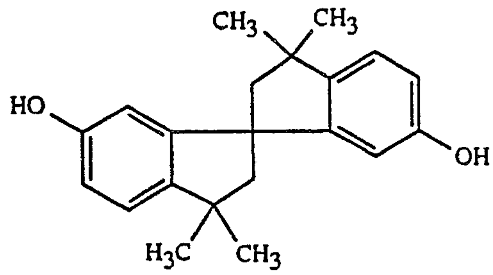

(V*),

Die Verbindungen der Formel VI stellen auch bekannte Verbindungen dar, und sind grösstenteils im Handel erhältlich. Beispiele für geeignete zweiwertige Phenole der Formel VI sind Hydrochinon, Resorcin, 4,4′-Dihydroxydiphenyl; 4,4′-Dihydroxydiphenylether, 4,4′-Dihydroxydiphenylsulfon, 4,4′-Dihydroxybenzophenon, 4,4′-Dihydroxydiphenylmethan, 4,4′-Dihydroxydiphenylthioether oder Dihydroxynaphthalin.

Die erfindungsgemässen Polyetherharze können in der für Thermoplaste üblichen Weise eingesetzt und z.B. zu Formkörpern oder Folien verarbeitet werden, oder als Matrixharze, Klebstoffe oder Ueberzugsmittel eingesetzt werden. Vor der Verarbeitung der beispielsweise als Presspulver, Schmelze oder Lösung vorliegenden Polyarylenether können übliche Zusatzstoffe, wie beispielsweise Füllstoffe, Pigmente, Stabilisatoren oder Verstärkungsmittel, wie Kohlenstoff-, Bor- oder Glasfasern, zugegeben werden. Die erfindungsgemässen Polyarylenether können auch zusammen mit anderen Thermoplasten verarbeitet werden. Ausserdem eignen sie sich als Modifikationsmittel für heisshärtbare Harze, wie Epoxidharze oder Bismaleinimide.

Vorzugsweise eignen sich die erfindungsgemässe Polyarylenether als Matrixharze für die Herstellung von Faserverbundsystemen, wobei man als Verstärkungsfasern die üblichen bei der Verstärkung technischer Werkstoffe verwendeten Fasern einsetzen kann. Diese können organische oder anorganische Fasern, Naturfasern oder Synthesefasern, wie Aramid-Fasern sein, und als Faserbündel, als orientierte oder nichtorientierte Fasern oder als Endlosfasern vorliegen. Beispielsweise verwendet man als Verstärkungsfasern Glas-, Asbest-, Bor-, Kohlenstoff- und Metallfasern.

Wie die oben geschilderte Anwendungspalette zeigt, sind die erfindungsgemässen Polyarylenether breit als technische Werkstoffe einsetzbar.

Beispiel 1: In einem Rundkolben mit Rührer und Schutzgasanschluss wird unter Stickstoff eine Mischung aus 15,45 g (0,0501 Mol) 6,6′-Dihydroxy-3,3,3′,3′-tetramethyl-1,1′-spirobiindan (hergestellt gemäss Beispiel 1 der EP-A-0264026), 5,54 g (0,0503 Mol) Hydrochinon, 81,24 g Diphenylsulfon, 7,64 g (0,0553 Mol) Kaliumcarbonat, 5,88 g (0,0587 Mol) Calciumcarbonat und 52,24 g Xylol bei einer Badtemperatur von 200° C erhitzt und ein Xylol/Wasser-Gemisch abdestilliert. Gegen Ende des Destillationsvorganges wird dabei kurzzeitig Vakuum (200 Pa) angelegt. Sodann werden 21,89 g (0,1003 Mol) 4,4′-Difluorobenzophenon zu der Reaktionsmischung gegeben, die Temperatur auf 250° C erhöht und dort 1 Stunde belassen. Es schliessen sich 1 Stunde bei 300° C und 2 Stunden bei 320° C an, wobei die Reaktionsmischung in zunehmendem Masse viskos wird.

Nach Abkühlen wird die Reaktionsmischung dem Kolben entnommen, pulverisiert und mit 2-n Salzsäure versetzt, mit Wasser neutral gewaschen und im Soxhlet-Extraktor zunächst mit Wasser und dann mit Aceton extrahiert. Das Polymere wird danach im Vakuumtrockenschrank bis zu einer Temperatur von 240° C getrocknet. Ein auf diese Weise hergestelltes Polyetherketon-Copolymeres mit Bisphenolspirobiindan-Einheiten besitzt eine durch DSC bestimmte Glasübergangstemperatur (Tg) von 189° C.

Beispiele 2-6: In einem Rundkolben mit Rührer und Schutzgasanschluss wird unter Stickstoff eine Mischung aus 15,48 g (0.0502 Mol) 6,6′-Dihydroxy-3,3,3′,3′-tetramethyl-1,1′-spirobiindan, 10,78 g (0.0503 Mol) 4,4′-Dihydroxybenzophenon, 81,24 g Diphenylsulfon, 15,28 g (0,1106 Mol) Kaliumcarbonat und 52,24 g Xylol bei einer Badtemperatur von 200° C erhitzt und ein Xylol/Wasser-Gemisch abdestilliert. Gegen Ende des Destillationsvorganges wird dabei kurzzeitig Vakuum angelegt. Sodann werden 21,89 g (0,1003 Mol) 4,4′-Difluorobenzophenon zu der Reaktionsmischung gegeben, die Temperatur auf 250° C erhöht und dort 1 Stunde belassen. Es schliessen sich 1 Stunde bei 300° C und 2 Stunden bei 320° C an, wobei die

Reaktionsmischung in zunehmendem Masse viskos wird.

Nach Abkühlen wird die Reäktionsmischung dem Kolben entnommen, pulverisiert und mit Essigsäure versetzt, mit Wasser neutral gewaschen und im Soxhlet-Extraktor zunächst mit Wasser und dann mit Aceton extrahiert. Anschliessend wird das Polymere in einem geeigneten Lösungsmittel gelöst (in Bsp. 4: N-Methylpyrrolidon; in Bsp. 5 und 6: Methylenchlorid) und jeweils in Isopropanol ausgefällt. Danach wird das Polymere im Vakkumtrockenschrank bis zu einer Temperatur von 240 °C getrocknet. Die durch DSC bestimmten Glasübergangstemperaturen (Tg) der auf diese Weise hergestellten Polyarylenether mit Bisphenolspirobiindan-Einheiten sind in untenstehender Tabelle zusammengestellt. Zum Nachweis der sehr guten thermischen Stabilität der beschriebenen Polyarylenether wird der Gewichtsverlust mittels TGA bestimmt.

Die Resultate sind ebenfalls in der untenstehenden Tabelle aufgeführt:

| Bsp. | Polyarylenether hergestellt aus | Reaktions-bedingungen | Tg [°C] DSC | red. Visk. [dl/g] | Tz (1 %) TGA [°C] | Tz (5 %) TGA [°C] |
|---|---|---|---|---|---|---|
| 1 | <u>Polyetherketon-Copolymeres</u><br>6,6'-Dihydroxy-3,3,3',3'-tetramethyl-1,1'-spirobiindan (0,0501 mol)<br>Hydrochinon (0,0503 mol)<br>4,4'-Difluorbenzophenon (0,1003 mol)<br>Kaliumcarbonat (0,0553 mol)<br>Calciumcarbonat (0,0587 mol) *) | 1 h/250°C<br>1 h/300°C<br>2 h/320°C | 189 | 1.08 (lösl. Anteil) | 490 | > 500 |
| 2 | <u>Polyetherketon-Copolymeres</u><br>6,6'-Dihydroxy-3,3,3',3'-tetramethyl-1,1'-spirobiindan (0.0502 mol)<br>4,4'-Dihydroxybenzophenon (0,0503 mol)<br>4,4'-Difluorbenzophenon (0,1003 mol)<br>Kaliumcarbonat (0,1106 mol) | 1 h/250°C<br>3 h/320°C | 183<br>($T_m$=310) | 0,13 (lösl. Anteil) | 455 | > 500 |
| 3 | <u>Polyetherketon-Copolymeres</u><br>6,6'-Dihydroxy-3,3,3',3'-tetramethyl-1,1'-spirobiindan (0,0500 mol)<br>4,4'-Dihydroxybiphenyl (0,0503 mol)<br>4,4'-Difluorobenzophenon (0,1002 mol)<br>Kaliumcarbonat (0,1107 mol) | 1 h/250°C<br>3 h/320°C | 195 | 0,10 (lösl. Anteil) | 459 | > 500 |

Tg/DSC: Heizrate 10°C/Minute

red. Visk.: 1 Gew.% Polymeres in NMP bei 25°C (NMP: N-Methylpyrrolidon)

Tz/TGA: Gewichtsverlust von 1 % (5 %) tritt bei der angegebenen Temperatur ein. Heizrate 10°C/min unter $N_2$

*) Kalium/Calciumcarbonat-Mischungen als Kondensationshilfsmittel bei der Herstellung aromatischer Polyether sind in DE 33 42433 beschrieben

Diese Beispiele zeigen die ausserordentliche hohe thermische Stabilität der erfindungsgemässen Polyarylenether

| Bsp. | Polyarylenether hergestellt aus | Reaktionsbedingungen | Tg [°C] DSC | red. Visk. [dl/g] | Tz (1 %) TGA [°C] | Tz (5 %) TGA [°C] |
|---|---|---|---|---|---|---|
| 4 | <u>Polyetherketonsulfon-Copolymeres</u><br>6,6'-Dihydroxy-3,3,3',3'-tetramethyl-1,1'-spirobiindan (0,0250 mol)<br>4,4'-Dihydroxydiphenylsulfon (0,0251 mol)<br>4,4'-Difluorbenzophenon (0,0502 mol)<br>Kaliumcarbonat (0,0555 mol) | 1 h/250°C<br>3 h/320°C | 181 | 0.15 | 438 | 487 |
| 5 | <u>Polyethersulfon-Copolymeres</u><br>6,6'-Dihydroxy-3,3,3',3'-tetramethyl-1,1'-spirobiindan (0.0368 mol)<br>4,4'-Dihydroxydiphenylsulfon (0,0370 mol)<br>4,4'-Dichlordiphenylsulfon (0,0738 mol)<br>Kaliumcarbonat (0,0812 mol) | 1 h/250°C<br>3 h/320°C | 225 | 0,35 | 430 | 475 |
| 6 | <u>Polyethersulfon-Copolymeres</u><br>6,6'-Dihydroxy-3,3,3',3'-tetramethyl-1,1'-spirobiindan (0,1001 mol)<br>4,4'-Dihydroxydiphenylsulfon (0,3004 mol)<br>4,4'-Dichlordiphenylsulfon (0,4001 mol)<br>Kaliumcarbonat (0,4220 mol) | 1 h/250°C<br>5 h/320°C | 232 | 0,75 | 417 | 459 |

Für zwei Beispiele sind in untenstehender Tabelle einige Werte aufgeführt, die die sehr guten mechanischen Eigenschaften der erfindungsgemässen Polyarylenether mit Bisphenolspirobiindan-Einheiten erkennen lassen.

| Bsp. | | Zugfestigkeit [N/mm$^2$] | Reissdehnung [%] |
|---|---|---|---|
| 2 | Polyetherketon-Copol. | 45 | 7.9 |
| 6 | Polyethersulfon-Copol. | 56 | 4.0 |

Messung an Folien (Dicke ca. 0.2 mm) nach DIN 53455

**Ansprüche**

1. Polyarylenether, die, bezogen auf die Gesamtmenge der im Polyetherharz vorhandenen Strukturelemente, 10-90 Mol-% eines wiederkehrenden Strukturelements der Formel I

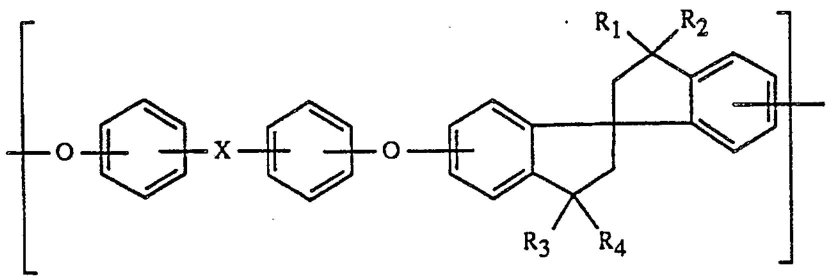

(I)

und 10-90 Mol-% eines wiederkehrenden Strukturelements der Formel II

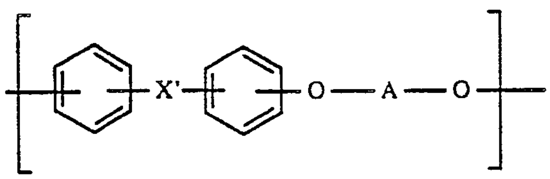

(II)

enthalten, worin X und X′ unabhängig voneinander -SO-, $-SO_2-$ oder -CO- bedeuten, $R_1$, $R_2$, $R_3$ und $R_4$ unabhängig voneinander Wasserstoff oder $C_1$-$C_4$-Alkyl sind, und A eine Gruppe der Formeln IIIa-IIIe darstellt

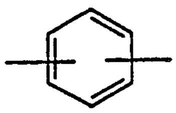 (IIIa), 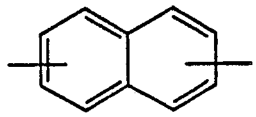 (IIIb), 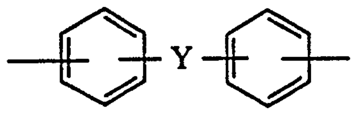 (IIIc),

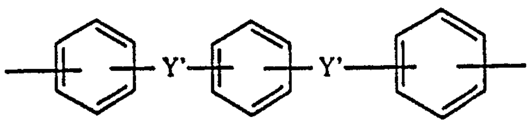 (IIId) oder

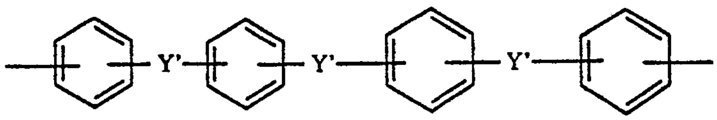 (IIIe),

wobei Y für $-CH_2-$, $-C(CF_3)_2-$, -S-, -SO-, $-SO_2-$, -O- oder -CO- und Y′ für eine direkte Bindung, $-CH_2-$, $-C(CH_3)_2-$, $-C(CF_3)_2$, -S-, -SO-, $-SO_2-$, -O-, -CO- steht.

2. Polyarylenether gemäss Anspruch 1, die 10-70 Mol-% eines wiederkehrenden Strukturelements der Formel I und 90-30 Mol-% eines wiederkehrenden Strukturelements der Formel II enthalten.

3. Polyarylenether gemäss Anspruch 1, die 10-55 Mol-% eines wiederkehrenden Strukturelements der Formel I und 90-45 Mol-% eines wiederkehrenden Strukturelements der Formel II enthalten.

4. Polyarylenether gemäss Anspruch 1, wobei X in Formel I und X′ in Formel II unabhängig voneinander $-SO_2-$ oder -CO- bedeuten.

5. Polyarylenether gemäss Anspruch 1, wobei die Reste $R_1$, $R_2$, $R_3$ und $R_4$ in Formel I Methyl bedeuten.

6. Polyarylenether gemäss Anspruch 1, wobei Y in der Formel IIIc -S-, $-SO_2-$, -O- oder -CO- und Y′ in den Formeln IIId und IIIe eine direkte Bindung, $-C(CH_3)_2-$, -S-, $-SO_2-$, -O-oder -CO- bedeutet.

7. Polyarylenether gemäss Anspruch 1, wobei A eine Gruppe der Formeln IIIa oder IIIc, worin Y -S-, $-SO_2-$, -O- oder -CO- ist, bedeutet.

8. Polyarylenether gemäss Anspruch 1, wobei A eine Gruppe der Formel IIIc, worin Y gleich $-SO_2-$ ist, bedeutet.

Patentansprüche für folgenden Vertragsstaat: ES

1. Verfahren zum Herstellen von Polyarylenethern, die, bezogen auf die Gesamtmenge der im Polyetherharz vorhandenen Strukturelemente, 10-90 Mol-% eines wiederkehrenden Strukturelements der Formel I

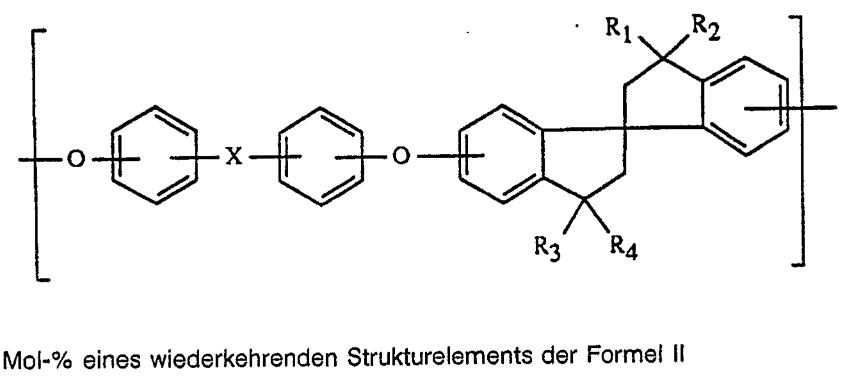 (I)

und 10-90 Mol-% eines wiederkehrenden Strukturelements der Formel II

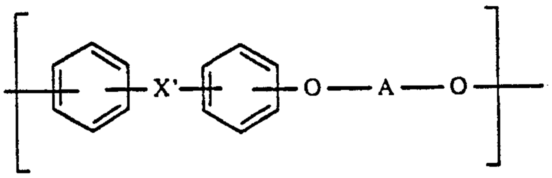 (II)

enthalten, worin X und X' unabhängig voneinander -SO-, $-SO_2-$ oder -CO- bedeuten, $R_1$, $R_2$, $R_3$ und $R_4$ unabhängig voneinander Wasserstoff oder $C_1$-$C_4$-Alkyl sind, und A eine Gruppe der Formeln IIIa-IIIe darstellt

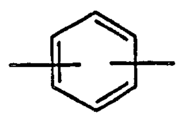 (IIIa), 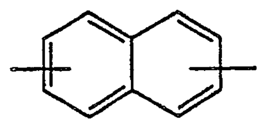 (IIIb), 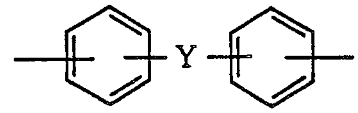 (IIIc),

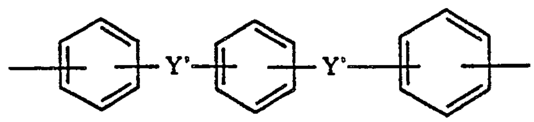 (IIId) oder

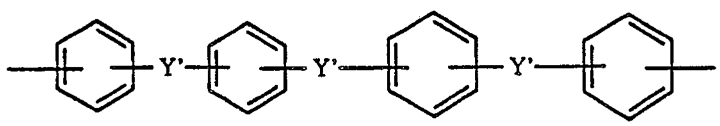 (IIIe),

wobei Y für $-CH_2-$, $-C(CF_3)_2-$, -S-, -SO-, $-SO_2-$, -O- oder -CO- und Y' für eine direkte Bindung, $-CH_2-$, $-C(CH_3)_2-$, $-C(CF_3)_2$, -S-, -SO-, $-SO_2-$, -O-, -CO- steht, dadurch gekennzeichnet, dass man eine Verbindung der Formel IV

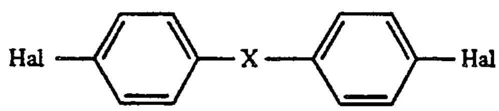 (IV),

worin Hal für Halogen, insbesondere für Fluor oder Chlor steht, und X die oben angegebene Bedeutung hat, mit einem Spirobiindan der Formel (V)

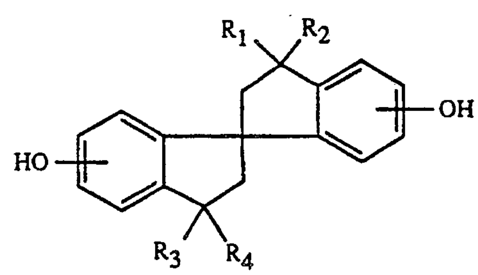 (V),

worin $R_1$, $R_2$, $R_3$ und $R_4$ die oben angegebenen Bedeutungen haben, mit einem Gemisch aus einer Verbindung der Formel V und einem darin bis zu 90 Mol-% enthaltenden Phenol der Formel VI

HO-A-OH (VI),

worin A die oben angegebene Bedeutung hat,

in an sich bekannter Weise in Gegenwart alkalischer Katalysatoren in einem polaren aprotischen Lösungsmittel polykondensiert.

2. Verfahren gemäss Anspruch 1, die 10-70 Mol-% eines wiederkehrenden Strukturelements der Formel I und 90-30 Mol-% eines wiederkehrenden Strukturelements der Formel II enthalten.

3. Verfahren gemäss Anspruch 1, die 10-45 Mol-% eines wiederkehrenden Strukturelements der Formel I und 90-55 Mol-% eines wiederkehrenden Strukturelements der Formel II enthalten.

4. Verfahren gemäss Anspruch 1, wobei X in Formel I und X' in Formel II unabhängig voneinander $-SO_2-$ oder -CO- bedeuten.

5. Verfahren gemäss Anspruch 1, wobei die Reste $R_1$, $R_2$, $R_3$ und $R_4$ in Formel I Methyl bedeuten.

6. Verfahren gemäss Anspruch 1, wobei Y in der Formel IIIc -S-, $-SO_2-$, -O- oder -CO-und Y' in den

Formeln IIId und IIIe eine direkte Bindung, $-C(CH_3)_2-$, -S-, $-SO_2-$, -O- oder -CO- bedeutet.

7. Verfahren gemäss Anspruch 1, wobei A eine Gruppe der Formeln IIIa oder IIIc, worin Y -S-, $-SO_2-$, -O- oder -CO- ist, bedeutet.

8. Verfahren gemäss Anspruch 1, wobei A eine Gruppe der Formel IIIc, worin Y gleich $-SO_2-$ ist, bedeutet.

9. Verfahren gemäss Anspruch 1, wobei anstelle des Diphenols der Formeln V und VI die entsprechenden Alkali- oder Erdalkali-Phenolate eingesetzt werden.